# EUROPÄISCHE PATENTANMELDUNG

(11) **EP 4 751 624 A1**
(43) Veröffentlichungstag der Anmeldung: **03.06.2026**
(21) Anmeldenummer: 24216734.4
(22) Anmeldetag: 02.12.2024
(51) Int. Cl.: A47J 37/07, A47B 31/02, A47J 37/06

(54) **MOBILER ESSTISCH MIT INTEGRIERTEM GARBEREICH**

(71) Anmelder: Novita Engineering GmbH, 8604 Volketswil (CH)
(72) Erfinder: Theiler, Priskus Antonius, 5621 Zufikon (CH); Widmer, Maic Andreas, 8620 Wetzikon (CH)
(74) Vertreter: Prins Intellectual Property AG

(57) **Zusammenfassung**

Bei einem mobilen Esstisch (1) umfassend eine gemeinsame Tischplatte (2), welche einer Gruppe von mindestens zwei Nutzern (8, 8') Platz zum gemeinsamen Garen von Speisen bietet, einen mittig in der Tischplatte (2) integrierten Garbereich (3), und eine integrierte gemeinsame Umluft-Aufbereitungseinheit (4) mit einer Absaugeinrichtung (5) zum Absaugen von Wrasen im Garbereich (3); ist es vorgesehen, dass der integrierte Garbereich (3) für jeden einzelnen Nutzer (8, 8') mindestens ein separat regelbares, elektrisch betriebenes Heizmodul (30, 30') aufweist, welches unterhalb einer Tischplattenoberfläche eingebaut ist; wobei der Esstisch weiter mehrere auswechselbare Garplatteneinsätze (31, 31') umfasst, welche in einer Vertiefung des Esstisches über jedem Heizmodul (30, 30') eingelegt sind.

## Beschreibung

### Technisches Gebiet

Die Erfindung betrifft einen mobilen Esstisch mit integriertem Garbereich.

### Technischer Hintergrund

Esstische für mehrere Personen mit integriertem Garbereich sind bekannt. Diese weisen einen mittig in einer Tischplatte versenkten Grill auf, welcher von den mehreren Personen gemeinsam genutzt wird. Diese bekannten Esstische mit Grill weisen mehrere Nachteile auf.

Verwendung eines solchen Esstischs in einem Raum beeinträchtigt in kürzester Zeit die Qualität der Raumluft, da diese durch die Essensdünste angereichert wird. Meist wird der Essensgeruch in unerwünschter Weise von den Kleidern aufgenommen. Zudem wird sich je nach Grösse des Raums oder bei grosser Anzahl solcher Esstische, z.B. in einem Restaurant, die Lufttemperatur unangenehm erhöhen, was der Gemütlichkeit beim Essen abträglich ist. Ein weiteres wesentliches Problem besteht darin, dass die Esstische mit gemeinsamer Grillplatte nicht für eine Gruppe von Personen geeignet sind, welche unterschiedliche Ernährungsformen pflegen. So möchte beispielsweise eine sich vegan ernährende Person aufgrund von Kreuzkontaminationen nicht eine Grillplatte mit einer Person teilen, die sich ein Stück Fleisch auf den Grill legt.

### Darstellung der Erfindung

Eine Aufgabe der Erfindung ist es, einen kompakt gebauten und mobilen Esstisch mit einem Garbereich anzugeben, bei dem die Nutzer wie bei einem herkömmlichen Esstisch beieinandersitzen können, aber gleichzeitig Kreuzkontaminationen bei durch die gemeinsamen Nutzer selbst zubereiteten Speisen vermieden werden. Zudem sollen auch Kreuzkontamination bei nachfolgenden Nutzern, z.B. in einem Restaurantbetrieb, auf einfache Weise vermieden werden.

Diese Aufgabe wird durch einen mobilen Esstisch mit den Merkmalen des Anspruch 1 gelöst. Der mobile Esstisch umfasst eine gemeinsame Tischplatte, welche einer Gruppe von mindestens zwei Nutzern Platz zum gemeinsamen Garen von Speisen bietet, einen mittig in der Tischplatte integrierten Garbereich, und eine integrierte gemeinsame Umluft-Aufbereitungseinheit mit einer Absaugeinrichtung zum Absaugen von Wrasen (d.h. Dämpfe aus Luft, Wasser und Fett, die beim Braten oder Kochen entstehen) im Garbereich. Der integrierte Garbereich weist für jeden einzelnen Nutzer mindestens ein separat regelbares, elektrisch betriebenes Heizmodul auf, welches unterhalb der Tischplattenoberfläche eingebaut ist. Der Esstisch umfasst weiter mehrere auswechselbare Garplatteneinsätze, welche in einer Vertiefung des Esstisches über jedem Heizmodul eingelegt sind.

Der mobile Esstisch ist entsprechend so konzipiert, dass er als Einheit in einem Raum mit vorhandener Stromversorgung betrieben werden kann und somit mobil in verschiedenen Räumlichkeiten aufstellbar ist. Unter einem mobilen Esstisch wird also ein Tisch verstanden, welcher ohne aufwendige Montage / Demontage in einem Raum oder zwischen unterschiedlichen Räumen bewegt werden kann. In die Tischmitte ist ein Bereich integriert, der sowohl der Zubereitung von Speisen als auch der Absaugung der dabei entstehenden Essensdünste (Wrasen) dient. Der integrierte Garbereich umfasst mehrere separate, erhitzbare Bereiche zum Garen von Lebensmitteln. Die Garplatteneinsätze sind entsprechend zum direkten Auflegen von Speisen geeignet. Die einzelnen Garplatteneinsätze eines Nutzers sind von denen eines anderen Nutzer getrennt, um Kreuzkontamination zwischen gleichzeitigen Nutzern zu vermeiden. Die eingelegten Garplatteneinsätze, welche lose eingelegt oder arretiert sein können, erlauben ein schnelles Entfernen der Garplatteneinsätze nach erfolgtem Essen, so dass - z.B. in einem Restaurantbetrieb - der Esstisch umgehend gereinigt und mit neuen, sauberen Garplatteneinsätze bestückt werden kann. Auf diese Weise wird Kreuzkontamination bei nachfolgenden Nutzern ebenfalls vermieden. Durch diese Trennung der Garplatteneinsätze für jeden Nutzer und die einfache Auswechselbarkeit der Garplatteneinsätze ist der Esstisch zum Garen von Speisen mit einer gemischten Gruppe von sowohl Vegetarier, Veganer als auch Fleischesser geeignet, sowohl gleichzeitig als auch nacheinander.

Zudem werden die entstehenden Essensdünste (Wrasen) durch die im Tisch integrierte Absaugung erfasst und anschliessend gefiltert, um Gerüche zu neutralisieren, was stets ein angenehmes Raumklima gewährleistet. Bei einem solchen Esstisch können mehrere Nutzer oder Gäste eines Restaurants genügend nahe beieinandersitzen und sich ungehindert unterhalten. Aufgrund der integrierten gemeinsame Umluft-Aufbereitungseinheit wird die Raumluft durch die Zubereitung der Speisen nicht beeinträchtig. Der Esstisch ist entsprechend für den Betrieb in geschlossenen Räumen (Indoor-Betrieb), z.B. ein Restaurant, oder auch für den Outdoor-Betrieb geeignet.

Das Heizmodul kann auf Induktion oder auf Heizen mittels Heizwendel basieren. Bevorzugt ist der Garplatteneinsatz durch das Heizmodul induktiv heizbar. Dies erlaubt ein noch schnelleres Auswechseln der Garplatteneinsätze aufgrund kürzerer Abkühlzeiten.

Das Garen bezeichnet die Behandlung von Lebensmitteln mit Wärme, um deren Konsistenz, Geschmack, Verdaulichkeit und/oder gesundheitliche Wirkung zu verändern. Es wird unterschieden zwischen feuchten Gartechniken unter Zugabe von Wasser (z.B. Kochen, Dampfgaren oder Schmoren), bei denen die Hitze über das Wasser indirekt auf das Gargut übertragen wird, oder trockenen Gartechniken ohne Zugabe von Wasser (z.B. Braten, Grillen oder Rösten) bei denen die Hitze über die Garplattenoberfläche direkt auf das Gargut übertragen wird.

Bevorzugte Ausführungsarten der Erfindung sind in den abhängigen Ansprüchen angegeben.

Die Form des Esstisches resp. dessen Tischplatte kann der Form herkömmlicher Esstische entsprechen. Sie kann je nach Anzahl Nutzer rechteckig, rund oder oval sein. So ist beispielsweise ein kreisrunder Esstisch z.B. für vier Nutzer geeignet. Ein ovaler Esstisch kann beispielsweise für eine grosse Anzahl von bis zu zwölf Nutzern geeignet sein. Rechteckige Esstische sind wiederum vorteilhaft, wenn mehrere Tische, z.B. für jeweils zwei oder vier Nutzer in einem Restaurant aneinandergereiht werden sollen.

In einigen Ausführungsformen kann der Esstisch resp. die Tischplatte für eine Gruppe von mindestens vier Nutzern dimensioniert sein. Bevorzugt ist die Anzahl Nutzer eine gerade Zahl (z.B. vier, acht, zehn oder zwölf Nutzer).

In einigen Ausführungsformen kann der integrierte Garbereich für jeden einzelnen Nutzer mehrere Garplatteneinsätze aufweisen, die über ein oder mehrere elektrisch betriebene Heizmodule separat regelbar sind.

In einigen Ausführungsformen kann der mindestens eine Garplatteneinsatz ausgewählt sein aus einem Set von Garplatteneinsätzen umfassend eine Platte mit gerillter Oberfläche, eine plane Platte, eine Platte mit umlaufendem erhöhtem Rand (ca. 1 bis maximal 2 Zentimeter), eine Platte mit Handgriff, oder Kombinationen davon. Ein Nutzer kann - je nach Belieben und den gewünschten Speisen - den entsprechenden Garplatteneinsatz in die dazu vorgesehene Vertiefung einlegen. Die maximale Dicke des Garplatteneinsatzes (ohne Griff, mit/ohne Rillen) kann etwa 2 Zentimeter sein. Die Vertiefung kann entsprechend an die Dicke des Garplatteneinsatzes angepasst sein, so dass eine Oberfläche oder Oberkante des eingelegten Garplatteneinsatzes in etwa auf der Höhe der Tischplattenoberfläche liegt. Eine Anordnung der Garplatteneinsätze auf der Höhe der Oberfläche der Tischplatte erleichtert die Zugänglichkeit resp. ermöglicht ein einfaches Einlegen und Entnehmen der Speisen.

Die Garplatteneinsätze können in verschiedenen geometrischen Ausführungen gestaltet werden, oder in einer Kombination dieser Ausführungen. Die jeweiligen Varianten sind jedoch immer pro Nutzer/Gast voneinander getrennt, um eine Kreuzkontamination der Speisen zu verhindern. Die Garplatteneinsätze können rund, z.B. in Form eines Ringsektors, oder viereckig sein.

In einigen Ausführungsformen weist der Garplatteneinsatz eine Garfläche von mindestens 150 cm2, oder 150 - ca. 800 cm2, auf.

In einigen Ausführungsformen kann der Garplatteneinsatz Bereiche mit einem Gefälle aufweisen und der Garbereich oder der Garplatteneinsatz kann eine Wanne oder einen Auffangbehälter für ablaufende beim Kochen entstehende Flüssigkeiten aufweisen. Beim Zubereiten verwendetes oder entstehendes Fett und Öl und entstehende Säfte können so abgeleitet und aufgefangen werden. Dies reduziert neben der Rauchentwicklung auch die Intensität des Spritzens beim Grillen, was das Risiko einer Kreuzkontamination zusätzlich reduziert. Bereiche mit einem Gefälle können als Schlitze in dem Garplatteneinsatz ausgeführt sein.

In einigen Ausführungsformen kann die Absaugeinrichtung mindestens eine Absaugöffnung aufweisen, die über einen zentralen Luftkanal mit der integrierten Umluft-Aufbereitungseinheit verbunden ist. Auf diese Weise kann die Umluft-Aufbereitungseinheit an einem Ende des Esstisches angeordnet sein und die Wrasen können dennoch effizient abgesaugt werden. Jeder eingesetzte Garplatteneinsatz kann zum Absaugen von Wrasen einer Absaugöffnung zugeordnet sein. Weist der Kochbereich eines Nutzers mehr als einen Garplatteneinsatz auf, können alle einer einzigen Absaugöffnung zugeordnet sein.

In einigen Ausführungsformen kann der Garplatteneinsatz eines Nutzers mittels der Absaugeinrichtung und/oder mittels einer Spritzschutzwand von dem unmittelbar benachbarten Garplatteneinsatz eines anderen Nutzers getrennt sein.

In einigen Ausführungsformen kann die Absaugeinrichtung und die Umluft-Aufbereitungseinheit mehrere Filterstufen aufweisen. Die Absaugeinrichtung kann einen oder mehrere Fettfilter aufweisen, die vorzugsweise in der Nähe des Garplatteneinsatzes resp. der Absaugöffnung angeordnet sind. Der beim Zubereiten der Speisen entstehende Dunst kann mittels Lüfter direkt abgesaugt und zunächst durch einen Fettfilter geleitet werden, der sich in der Nähe der Zubereitungsflächen befindet. Der Fettfilter sondert das Fett und Öl aus den abgesaugten Wrasen ab. Hinter dem Fettfilter kann sich ein weiterer Filter im Luftkanal befinden, der verbliebene Geruchspartikel in der abgezogenen Luft filtert oder neutralisiert (geruchsneutralisierender Filter).

In einigen Ausführungsformen kann die Umluft-Aufbereitungseinheit mindestens einen geruchsneutralisierenden Filter aufweisen (z.B. ein regenerierender Aktivkohlefilter, ein Plasmafilter, oder Ähnliches) und optional eine Luftkühlung, eine Luftheizung, eine Luft-Odorierungseinrichtung, einen Luftentfeuchter (Trocknungseinheit, um überschüssige Luftfeuchtigkeit zu entfernen), einen Luftbefeuchter oder Kombinationen davon aufweisen. Nach der ersten Filterstufe kann die Luft durch einen geruchsneutralisierenden Filter in der Umluft-Aufbereitungseinheit geführt werden. Dabei kann die Luft zusätzlich odoriert werden, um einen bestimmten Duft beizumischen.

Die Umluft-Aufbereitungseinheit weist einen Auslass auf, welcher die aufbereitete und gereinigte Luft in die unmittelbare Umgebung ablässt. Diese Luft sollte so ungehindert wie möglich aus der Umluft-Aufbereitungseinheit entweichen können. Je grösser die Fläche auf der Ausblasseite ist, umso weniger entsteht ein störender Luftzug. Entsprechend ist die Umluft-Aufbereitungseinheit als Umluftsystem ausgeführt und leitet die gefilterte Luft zurück in denselben Raum, aus dem sie abgesaugt wurde. Die Umluft-Aufbereitungseinheit kann einen Wärmetauscher aufweisen, um die umgewälzte Luft zu kühlen und die Restwärme anderweitig nutzbar zu machen.

Die Essensdünste (Wrasen) können mittels der Absaugeinrichtung und der Umluft-Aufbereitungseinheit in mehreren Filterstufen (Fettfilter, geruchsneutralisierende Filter) gebunden werden, sodass nach der Filtrierung wieder wohlriechende Luft (Odorierungseinrichtung) aus der Umluft-Aufbereitungseinheit am Esstisch austritt.

Um das Raumklima zusätzlich zu verbessern kann die Luft in der Umluft-Aufbereitungseinheit auf eine gewünschte Temperatur und Feuchtigkeit gebracht werden.

In einigen Ausführungsformen kann die Umluft-Aufbereitungseinheit derart konfiguriert sein, dass sie zwischen einem Absaugbetrieb und einem Raumluftbetrieb wechseln kann. Der Absaugbetrieb dient zum Absaugen der Wrasen über die Absaugeinrichtung, wobei die Luft durch den Fettfilter und die Umluft-Aufbereitungseinrichtung geführt wird. Bei Raumluftbetrieb kann die Luft über einen weiteren Einlass ohne Absaugeinrichtung und Fettfilter in die Umluft-Aufbereitungseinrichtung geführt werden. Dabei wird die Raumluft direkt umgewälzt und auf die gewünschten Bedingungen (Geruchsneutralisierung, Odorierung, Temperatur und/oder Feuchtigkeit) gebracht.

In einem Gehäuse der Umluft-Aufbereitungseinheit können weitere technische Einrichtungen wie Schaltkomponenten und Regler untergebracht sein. Die Umluft-Aufbereitungseinheit resp. deren Gehäuse kann sich unterhalb der Tischplatte im Randbereich des Esstisches, mittig zwischen gegenübersitzenden Nutzern oder in einem Bereich zwischen benachbarten Nutzern befinden.

In einigen Ausführungsformen kann der Esstisch, oder die Absaugeinrichtung mit einem Sensor (z.B. eine Partikelsensor) versehen sein, welcher die Belastung der abgesaugten Luft oder die Belastung der Raumluft messen kann. Anhand der gemessenen Belastung kann über eine Steuerung die Intensität der Absaugung geregelt werden. Entsprechend kann der Esstisch eine Absaug-Steuerung aufweisen, welche derart konfiguriert ist, dass sie mittels eines Sensors eine Partikel-Belastung der abgesaugten Luft oder der Raumluft bestimmt und anhand der Messdaten die Intensität der Absaugeinrichtung reguliert.

In einigen Ausführungsformen kann die Absaugeinrichtung mit den Absaugöffnungen zwischen den Garplatteneinsätzen von sich gegenübersitzenden Nutzern angeordnet sein.

In einigen Ausführungsformen kann die Absaugeinrichtung in die Tischplatte integriert sein und die Absaugöffnung der Absaugeinrichtung kann zwischen den Garplatteneinsätzen zweier Nutzer angeordnet sein. Vorzugsweise ist die Absaugöffnung etwa auf gleicher Höhe wie der Garplatteneinsatz angeordnet. Der Fettfilter sowie die nachgelagerten Luftkanäle können als integrierte Absaugung unter der Tischoberfläche angeordnet sein. Entstehende Wrasen werden von der Absaugvorrichtung durch die Absaugöffnung eingesogen und über den zentralen Kanal der Umluft-Aufbereitungseinheit zugeführt. Die Absaugvorrichtung resp. die Absaugöffnung trennt dabei benachbarte Garplatteneinsätze unterschiedlicher Nutzer und verhindert auch Kreuzkontaminationen durch Spritzer beim Kochen, da diese ebenfalls eingesogen werden. Zusätzlich kann mittig über der Absaugöffnung eine Spritzschutzwand angeordnet sein.

In einigen Ausführungsformen kann die Absaugeinrichtung in der Tischplatte integriert sein und teilweise vertikal über die Tischplatte hinausragen. Dabei ist neben jedem Garplatteneinsatz jeweils eine Absaugöffnung angeordnet. Die Absaugeinrichtung kann als integrierte Absaugung teilweise über der Tischplatte angebracht sein. Entstehende Wrasen werden von der Absaugvorrichtung durch die Absaugöffnung eingesogen und über den zentralen Kanal der Umluft-Aufbereitungseinheit zugeführt. Die Absaugvorrichtung, resp. die Teile davon die über die Tischplatte ragen, trennen dabei benachbarte Garplatteneinsätze unterschiedlicher Nutzer und bilden eine Spritzschutzwand.

In einigen Ausführungsformen kann die Absaugeinrichtung vollständig auf der Tischplatte aufgesetzt oder über der Tischplatte angeordnet sein und über jedem Garplatteneinsatz jeweils eine Absaugöffnung angeordnet sein. Eine solche Absaugeinrichtung ist Teil des Esstisches und mit diesem verbunden. Eine über der Tischplatte angeordnete Absaugeinrichtung liegt wenigstens auf einer Stütze auf, durch welche der zentrale Luftkanal zur Umluft-Aufbereitungseinheit führt. Eine gemeinsame Absaugöffnung kann, z.B. in Form einer Hauben-Absaugung, über zwei Garplatteneinsätzen unterschiedlicher Nutzer angeordnet sein. Alternativ kann über jedem Garplatteneinsatz eine separate Absaugöffnung angeordnet sein. Zwischen gegenüberliegenden Garplatteneinsätzen unterschiedlicher Nutzer kann eine Spritzschutzwand angebracht sein.

Bei einer teilweise in der Tischplatte integrierten oder bei einer auf der Tischplatte aufgesetzten Absaugeinrichtung kann die Luftführung als V-Kanal ausgeführt sein, welcher jeweils zwei gegenüberliegende Absaugöffnungen mit dem zentralen Luftkanal verbindet.

Die Höhe der Elemente, welche über der Tischplatte angeordnet sind, erreichen eine maximale Höhe von etwa 15 bis 25 Zentimeter, so dass sich gegenübersitzende Nutzer sehen und ungehindert kommunizieren können.

In einigen Ausführungsformen kann zwischen seitlich benachbarten Garplatteneinsätzen unterschiedlicher Nutzer (d.h. Garplatteneinsätzen von Nutzern, die seitlich nebeneinandersitzen) eine Spritzschutzwand angebracht sein, um seitliche Kreuzkontaminationen zu verhindern.

In einigen Ausführungsformen kann der Esstisch eine Steuerung aufweisen, welche derart konfiguriert ist, dass die Zubereitungstemperatur für jeden Garplatteneinsatz individuell regulierbar ist und/oder die Umluft-Aufbereitungseinheit und die Absaugeinrichtung für jeden Garplatteneinsatz individuell regulierbar ist. Pro Nutzer können mehrere Garplatteneinsätze vorhanden sein. Die Absaugeinrichtung kann automatisch, z.B. anhand der beim Garen entstehenden Wrasen, regulierbar sein.

In einigen Ausführungsformen kann der Esstisch für jeden Nutzer eine Bedienungseinrichtung für die Steuerung aufweisen. Die Bedienungseinrichtung kann ein Display oder ein Touch-Screen umfassen. Die Bedienungseinrichtung ermöglicht die Steuerung der Garplatteneinsätze. Auf dem Display oder Touch-Screen können Vorschläge zu Menüs und entsprechend vorgeschlagene Kochparameter anzeigt werden. Die Bedienungseinrichtung oder die Steuerung kann via App auf einem internetfähigen Gerät (z.B. Smartphone oder Tablet) dargestellt werden. Die Bedienungseinrichtung und die Steuerung kann auch für das Bestellen von Getränken, das Bezahlen der Rechnung oder das Rufen einer Servicekraft konfiguriert sein.

In einigen Ausführungsformen kann der Esstisch eine Vorrichtung aufweisen, um den Garplatteneinsatz ein Dampfvorhang zu erzeugen. Der Dampfvorhang kann mit LED hinterleuchtet sein, um beispielsweise heisse Flächen zu visualisieren. Der Dampfvorhang kann geruchsneutralisierende Stoffe beinhalten.

In einigen Ausführungsformen kann der Esstisch einen Nutzersensor aufweisen, um festzustellen, ob ein Nutzer am Tisch sitzt.

In einigen Ausführungsformen kann der Esstisch ein Kommunikationsmodul umfassen, welches die Kommunikation mehrere Esstische untereinander ermöglicht. Eine Kommunikationssteuerung kann derart konfiguriert sein, dass je nach Auslastung eines oder mehrerer Esstische oder anhand einer gemessenen Luftbelastung ein Esstisch oder mehrere Esstische zwischen Absaugbetrieb bei den Garplatteneinsätzen oder Umluftbetrieb umschalten kann, sowie die Stärke der Absaugung regulieren kann. Die Luftbelastung kann mittels eines an dem Esstisch angebrachten Partikelmessgeräts erfasst werden. Der Umluftbetrieb muss dabei nicht immer aktiv sein und kann sich selbst ausschalten, sollte die Luftbelastung tief sein. Mehrere Umluft-Aufbereitungseinheiten können untereinander kommunizieren und es kann bei grossem Gästeaufkommen automatisch auf die nächste höhere Luftumwälzung geschaltet werden. Die Qualität der Luft wird dabei laufend automatisch ausgewertet.

Die Erfindung betrifft weiter ein Verfahren zum Betreiben eines voran beschriebenen Esstisches und die Verwendung des Esstisches zur Regulierung der Raumluft-Qualität.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: eine erste Variante eines mobilen Esstisches mit integriertem Garbereich und Umluft-Aufbereitungseinheit in einer Seitenansicht;
- Fig. 2: der mobile Esstisch auf Fig. 1 in einer Draufsicht;
- Fig. 3: eine zweite Variante eines mobilen Esstisches mit integriertem Garbereich und Umluft-Aufbereitungseinheit in einer Draufsicht;
- Fig. 4: eine dritte Variante eines mobilen Esstisches mit integriertem Garbereich und Umluft-Aufbereitungseinheit in einer perspektivischen Ansicht;
- Fig. 5: eine vierte Variante eines mobilen Esstisches mit integriertem Garbereich und Umluft-Aufbereitungseinheit in einer Seitenansicht;
- Fig. 6: eine Variante ähnlich der Variante aus Fig. 4 mit jeweils zwei Garplatteneinsätze pro Nutzer;
- Fig. 7: unter a) bis c) ein Querschnitt von verschiedenen Varianten der Absaugeinrichtung;
- Fig. 8: unter a) bis c) verschiedene Ausgestaltungen und Anordnungen der Garplatteneinsätze.

### Wege zur Ausführung der Erfindung

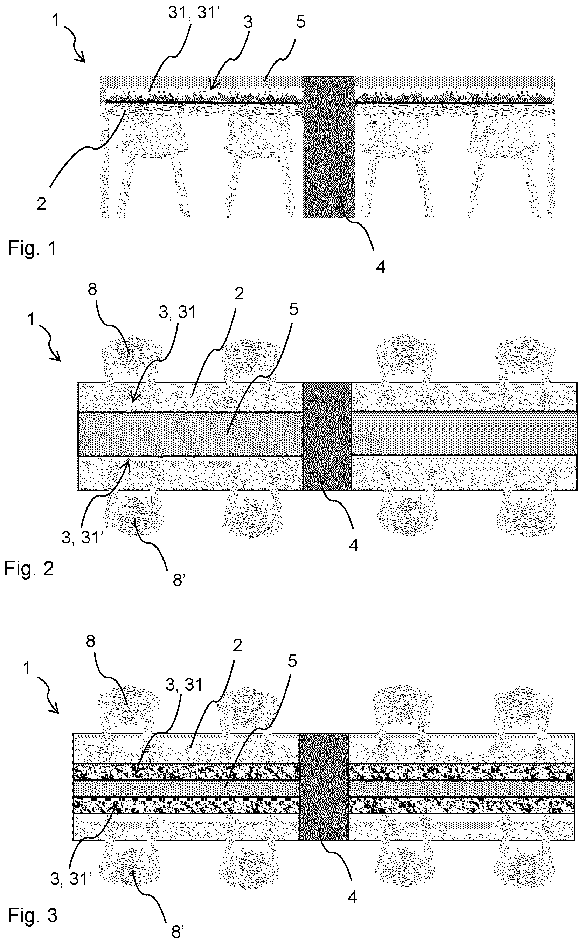

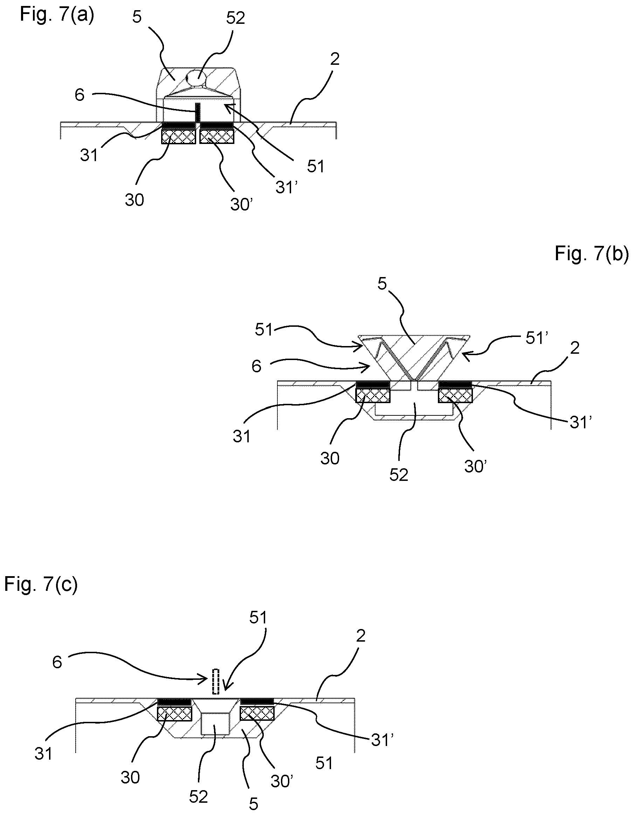

Die Figuren 1 bis 6 zeigen mehrere Varianten eines mobilen Esstisches 1 mit integriertem Garbereich 3 und Umluft-Aufbereitungseinheit 4, welcher für den Indoor-Betrieb geeignet ist. Allen Varianten ist gemeinsam, dass der mobile Esstisch 1 eine gemeinsame Tischplatte 2 umfasst, welcher einer Gruppe von mindestens zwei Nutzern 8, 8' Platz zum gemeinsamen Garen von Speisen bietet. Zwischen zwei gegenübersitzenden Nutzern 8, 8' ist mittig in der Tischplatte 2 ein Garbereich 3 integriert. Der Garbereich 3 weist für jeden einzelnen Nutzer 8, 8' mindestens ein separat regelbares, elektrisch betriebenes Heizmodul 30, 30' (vgl. Fig. 7(a) - 7(c)), welches unterhalb der Oberfläche der Tischplatte 2 eingebaut ist. Der Esstisch 1 umfasst weiter mehrere auswechselbare Garplatteneinsätze 31, 31', welche in einer Vertiefung des Esstisches über jedem Heizmodul 30, 30' eingelegt sind und deren Oberfläche resp. Oberkante etwa auf Höhe der Tischplatte 2 liegt. Der Esstisch 1 umfasst weiter eine integrierte, gemeinsame Umluft-Aufbereitungseinheit 4 mit einer Absaugeinrichtung 5 zum Absaugen von Wrasen bei jedem Garplatteneinsatz 31, 31'.

Fig. 1 und Fig. 2 zeigen jeweils eine erste Variante eines mobilen Esstisches 1 für acht Personen, wobei die Umluft-Aufbereitungseinheit 4 in der Mitte des Esstisches 1 angeordnet ist, so dass beidseitig vier Personen Platz haben. Die Absaugeinrichtung 5 ist in der ersten Variante über den jeweiligen Garplatteneinsätzen 31, 31' angeordnet und erstreckt sich beidseitig von der zentralen Umluft-Aufbereitungseinheit 4 mittig entlang der Tischplatte 2. Die Absaugeinrichtung 5 ist entsprechend an der Umluft-Aufbereitungseinheit 4 abgestützt und kann an den beiden Ende ebenfalls eine Stütze umfassen. Die Garplatteneinsätze 31, 31' befinden sich unter der Absaugeinrichtung 5 auf Höhe der Tischplatte 2 und sind von den Nutzern 8, 8' einfach bedienbar. Beim Kochen entstehende Wrasen werden von der Absaugeinrichtung 5 über Absaugöffnungen (nicht dargestellt) abgesaugt und der Umluft-Aufbereitungseinheit 4 zugeführt. Die Absaugeinrichtung 5 ist mit einem oder mehreren Fettfiltern ausgestattet. In der Umluft-Aufbereitungseinheit 4 sind mindestens ein geruchsneutralisierender Filter und optional eine Luftkühlung, eine Luftheizung, eine Luft-Odorierungseinrichtung, ein Luftentfeuchter, ein Luftbefeuchter oder Kombinationen davon vorgesehen. In der Umluft-Aufbereitungseinheit 4 wird die abgesaugte Luft aufbereitet und als frische Luft wieder in den Raum entlassen.

Fig. 3 zeigt eine zweite Variante eines mobilen Esstisches 1 mit integriertem Garbereich 3 und Umluft-Aufbereitungseinheit 4 in einer Draufsicht. Im Unterschied zur Variante aus Fig. 1 und Fig. 2 ist die Absaugeinrichtung 5 zwischen den jeweiligen Garplatteneinsätzen 31, 31' angeordnet und abgestützt. Sie kann dabei teilweise über die Garplatteneinsätze 31, 31' ragen.

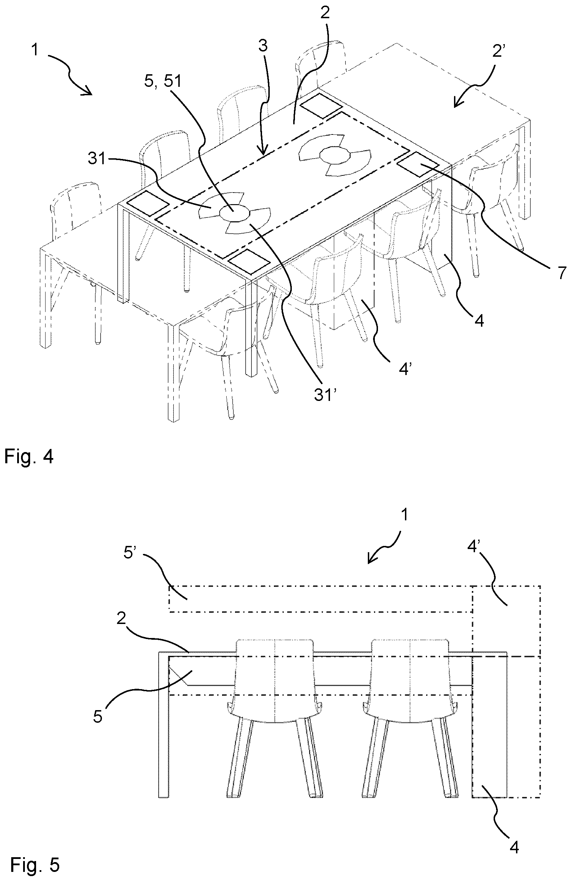

Fig. 4 zeigt eine dritte Variante eines mobilen Esstisches 1 mit integriertem Garbereich 3 und Umluft-Aufbereitungseinheit 4 in einer perspektivischen Ansicht. Im Unterschied zu den Varianten aus den Figuren 1 bis 3 ist bei der dritten Variante die Absaugeinrichtung 5 in der Tischplatte 2 integriert und unterhalb der Tischoberfläche angeordnet. Eine Absaugöffnung 51 der Absaugeinrichtung befindet sich jeweils zwischen zwei Garplatteneinsätzen 31, 31' von sich gegenübersitzenden Nutzern 8, 8'. Der Esstisch 1 aus Fig. 4 ist für vier Personen konfiguriert. Bei einer Konfiguration für vier Nutzer kann die Umluft-Aufbereitungseinheit 4 seitlich am Tischende angeordnet sein.

Fig. 4 zeigt strichliniert auch eine Konfiguration für acht Personen, wie beispielsweise in den Figuren 1 bis 3 dargestellt. Bei der strichlinierten Version sind jedoch der integrierte Garbereich mit den Garplatteneinsätzen und die Absaugeinrichtung nicht dargestellt ist.

Weiter kann der Esstisch in allen Ausführungsformen Bedienungseinrichtungen 7 für eine Steuerung aufweisen, wie in Fig. 4 dargestellt, mit welcher die Garplatteneinsätze 31, 31' für jeden Nutzer individuell regulierbar sind.

Fig. 5 zeigt die vierte Variante für vier Nutzer aus Fig. 4 in einer Seitenansicht. Dabei ist die unterhalb der Tischoberfläche angeordnete Absaugeinrichtung 5 erkennbar. Die Umluft-Aufbereitungseinheit 4 ist am Tischende angeordnet und kann zusätzlich als Tischbein dienen. Strichliniert ist eine Variante gezeigt, bei welcher die Absaugeinrichtung 5' über der Tischplatte 2 angeordnet ist, wie bei der Variante aus Fig. 1.

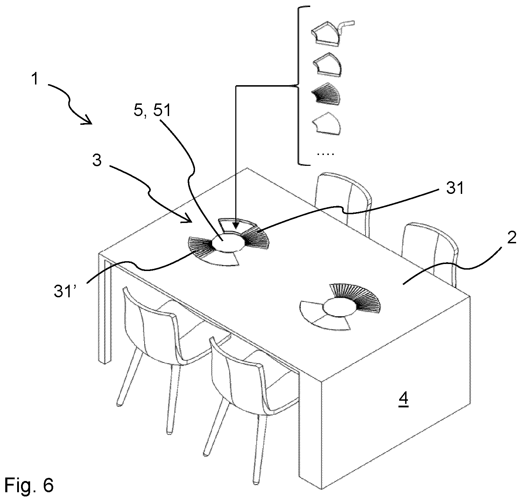

Fig. 6 zeigt einen Esstisch 1 ähnlich der Variante aus Fig. 4, wobei für jeden Nutzer 8, 8' zwei Heizmodul 30, 30' (nicht dargestellt) mit entsprechenden Garplatteneinsätzen 31, 31' vorhanden sind. In Fig. 6 ist auch ein Set unterschiedlicher Garplatteneinsätze dargestellt. Das Set von Garplatteneinsätzen kann eine Platte mit gerillter Oberfläche, eine plane Platte, eine Platte mit umlaufendem erhöhtem Rand, eine Platte mit Handgriff, oder Kombinationen davon umfassen.

Fig. 7 zeigt unter a) bis c) jeweils einen Querschnitt von verschiedenen Varianten der Absaugeinrichtung 5 und das jeweils unter dem Garplatteneinsatz 31, 31' angeordnete Heizmodul 30, 30'.

Bei der Variante aus Fig. 7(a) ist die Absaugeinrichtung 5 über den Garplatteneinsätzen 31, 31' und auf der Tischplatte 2 aufgesetzt angeordnet, wie auch in der Variante des Esstisches 1 aus Fig. 1. Die Absaugeinrichtung 5 weist eine gemeinsame Absaugöffnung 51 zum Absaugen der Wrasen von jeweils zwei sich gegenüberliegenden Garplatteneinsätzen 31, 31' auf. Die Absaugöffnung 51 ist mit einem zentralen Luftkanal 52 verbunden, welcher die abgesaugte Luft zur Umluft-Aufbereitungseinheit führt. Zwischen den zwei sich gegenüberliegenden Garplatteneinsätzen 31, 31' ist eine Spritzschutzwand 6 angeordnet, um Kreuzkontaminationen zu verhindern.

Bei der Variante aus Fig. 7(b) ist die Absaugeinrichtung 5 in die Tischplatte 2 integriert, wobei der zentral Luftkanal 52 unterhalb der Tischoberfläche angeordnet ist. Ein Teil der Absaugeinrichtung 5 mit den Absaugöffnungen 51, 51' ist über der Tischoberfläche angeordnet. Die Absaugöffnungen 51, 51' sind neben oder teilweise über den einander gegenüberliegenden Garplatteneinsätzen 31, 31' angeordnet und mit dem zentralen Luftkanal 52 verbunden. Der Teil der Absaugeinrichtung 5, welcher über der Tischplatte angeordnet ist, bildet eine Spritzschutzwand 6, um Kreuzkontaminationen zu verhindern.

Bei der Variante aus Fig. 7(c) ist die Absaugeinrichtung 5 in die Tischplatte 2 integriert resp. grösstenteils unterhalb der Tischplatte 2 angeordnet. Die Absaugöffnung 51 ist in der Oberfläche der Tischplatte 2 zwischen zwei sich gegenüberliegenden Garplatteneinsätzen 31, 31' angeordnet. Ein gemeinsamer, zentraler Luftkanal 52 ist unterhalb der Tischplatte 2 angeordnet und führt die abgesaugte Luft zur Umluft-Aufbereitungseinheit. Zwischen den zwei sich gegenüberliegenden Garplatteneinsätzen 31, 31' kann eine Spritzschutzwand 6 angeordnet sein, um Kreuzkontaminationen zu verhindern.

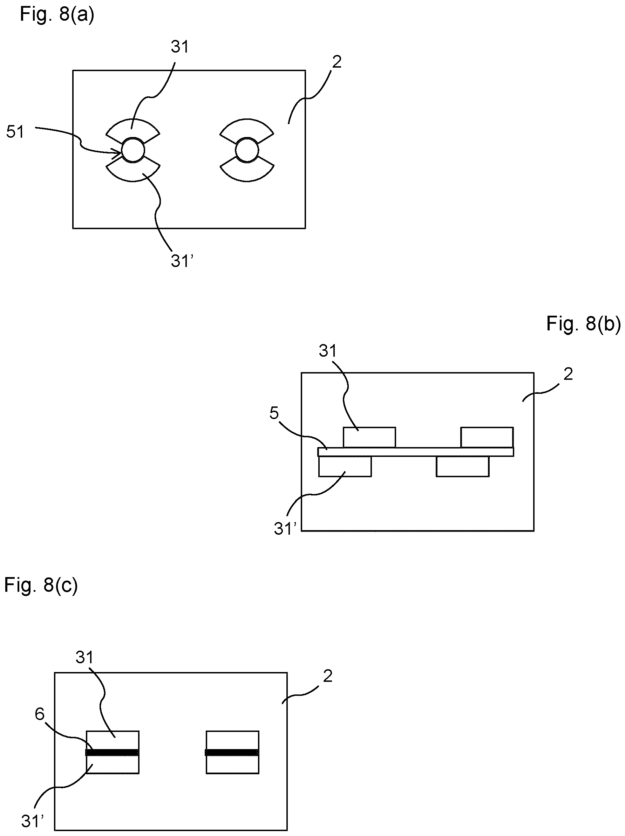

Die Garplatteneinsätze können in verschiedenen geometrischen Ausführungen gestaltet werden, oder in einer Kombination dieser Ausführungen. Die jeweiligen Varianten sind jedoch immer pro Nutzer/Gast voneinander getrennt, um eine Kreuzkontamination der Speisen zu verhindern. Die Garplatteneinsätze können rund, z.B. in Form eines Ringsektors (Fig. 8(a)) oder viereckig (Fig. 8(b) oder Fig. 8(c)) sein. Um Kreuzkontaminationen zu verhindern kann zwischen den Garplatteneinsätzen 31, 31' eine Absaugöffnung 51 (Fig. 8(a)), eine Spritzschutzwand 6 (Fig. 8(c)) oder eine Abzugseinrichtung 5 (Fig. 8(b)) angeordnet sein. Die Garplatteneinsätze 31, 31' können zueinander versetzt sein (Fig. 8(b)).

### Bezeichnungsliste

- 1: Esstisch
- 2: Tischplatte
- 3: Garbereich
- 30, 30': Heizmodul
- 31, 31': Garplatteneinsatz
- 4: Umluft-Aufbereitungseinheit
- 5: Absaugeinrichtung
- 51: Absaugöffnung
- 52: zentraler Luftkanal
- 6: Spritzschutzwand
- 7: Bedieneinrichtung
- 8, 8': Nutzer

## Patentansprüche

1. Mobiler Esstisch (1) umfassend
eine gemeinsame Tischplatte (2), welche einer Gruppe von mindestens zwei Nutzern (8, 8') Platz zum gemeinsamen Garen von Speisen bietet,
einen mittig in der Tischplatte (2) integrierten Garbereich (3), und
eine integrierte gemeinsame Umluft-Aufbereitungseinheit (4) mit einer Absaugeinrichtung (5) zum Absaugen von Wrasen im Garbereich (3);
**dadurch gekennzeichnet, dass**
der integrierte Garbereich (3) für jeden einzelnen Nutzer (8, 8') mindestens ein separat regelbares, elektrisch betriebenes Heizmodul (30, 30') aufweist, welches unterhalb einer Tischplattenoberfläche eingebaut ist;
wobei der Esstisch weiter mehrere auswechselbare Garplatteneinsätze (31, 31') umfasst, welche in einer Vertiefung des Esstisches über jedem Heizmodul (30, 30') eingelegt sind.

2. Mobiler Esstisch nach Anspruch 1, **dadurch gekennzeichnet, dass** der mindestens eine Garplatteneinsatz (31, 31') ausgewählt ist aus einem Set von Garplatteneinsätzen (31, 31') umfassend eine Platte mit gerillter Oberfläche, eine plane Platte, eine Platte mit umlaufendem erhöhtem Rand, eine Platte mit Handgriff, oder Kombinationen davon.

3. Mobiler Esstisch nach einem der vorangehenden Ansprüche, **dadurch gekennzeichnet, dass** der Garplatteneinsatz (31, 31') durch das Heizmodul (30, 30') induktiv heizbar ist.

4. Mobiler Esstisch nach einem der vorangehenden Ansprüche, **dadurch gekennzeichnet, dass** eine obere Fläche oder obere Kante des Garplatteneinsatzes (31, 31') etwa auf der Höhe der Oberfläche der Tischplatte (2) angeordnet ist.

5. Mobiler Esstisch nach einem der vorangehenden Ansprüche, **dadurch gekennzeichnet, dass** die Absaugeinrichtung (5) mindestens eine Absaugöffnung (51) aufweist, die über einen zentralen Luftkanal (52) mit der integrierten Umluft-Aufbereitungseinheit (4) verbunden ist, wobei jeder eingesetzte Garplatteneinsatz (31, 31') zum Absaugen von Wrasen einer Absaugöffnung (51) zugeordnet ist.

6. Mobiler Esstisch nach einem der vorangehenden Ansprüche, **dadurch gekennzeichnet, dass** der Garplatteneinsatz (31) eines Nutzers (8) mittels der Absaugeinrichtung (5) und/oder mittels einer Spritzschutzwand (6) von dem unmittelbar benachbarten Garplatteneinsatz (31') eines anderen Nutzers (8') getrennt ist.

7. Mobiler Esstisch nach einem der vorangehenden Ansprüche, **dadurch gekennzeichnet, dass** die Umluft-Aufbereitungseinheit (4) mindestens einen geruchsneutralisierenden Filter aufweist und optional eine Luftkühlung, eine Luftheizung, eine Luft-Odorierungseinrichtung, einen Luftentfeuchter, einen Luftbefeuchter oder Kombinationen davon aufweist.

8. Mobiler Esstisch nach einem der vorangehenden Ansprüche, **dadurch gekennzeichnet, dass** die Umluft-Aufbereitungseinheit (4) derart konfiguriert, dass sie zwischen einem Absaugbetrieb und einem Raumluftbetrieb wechseln kann.

9. Mobiler Esstisch nach einem der vorangehenden Ansprüche, **dadurch gekennzeichnet, dass** die Absaugeinrichtung (5) mit den Absaugöffnungen (51) zwischen den Garplatteneinsätzen (31, 31') von sich gegenübersitzenden Nutzern (8, 8') angeordnet ist.

10. Mobiler Esstisch nach einem der Ansprüche 1 bis 9, **dadurch gekennzeichnet, dass** die Absaugeinrichtung (5) in die Tischplatte (2) integriert ist und die Absaugöffnung (51) zwischen den Garplatteneinsätzen (31, 31') zweier Nutzer (8, 8') angeordnet ist.

11. Mobiler Esstisch nach einem der Ansprüche 1 bis 9, **dadurch gekennzeichnet, dass** die Absaugeinrichtung (5) in der Tischplatte (2) integriert ist und teilweise vertikal über die Tischplatte (2) hinausragt und neben jedem Garplatteneinsatz (31, 31') jeweils eine Absaugöffnung (51) angeordnet ist.

12. Mobiler Esstisch nach einem der Ansprüche 1 bis 9, **dadurch gekennzeichnet, dass** die Absaugeinrichtung (5) vollständig auf oder über der Tischplatte (2) angeordnet ist und über jedem Garplatteneinsatz (31, 31') jeweils eine Absaugöffnung (51) angeordnet ist.

13. Mobiler Esstisch nach einem der vorangehenden Ansprüche, **dadurch gekennzeichnet, dass** der Esstisch (1) eine Steuerung aufweist, welche derart konfiguriert ist, dass die Zubereitungstemperatur für jeden Garplatteneinsatz (31, 31') individuell regulierbar ist und/oder die Umluft-Aufbereitungseinheit (4) und die Absaugeinrichtung (5) für jeden Garplatteneinsatz (31, 31') individuell regulierbar ist, wobei der Esstisch für jeden Nutzer (8, 8') eine Bedienungseinrichtung (7) für die Steuerung aufweist..

14. Mobiler Esstisch nach einem der vorangehenden Ansprüche, **dadurch gekennzeichnet, dass** der Garplatteneinsatz (31, 31') Bereiche mit einem Gefälle aufweist und der Garbereich (3) oder der Garplatteneinsatz (31, 31') eine Wanne oder einen Auffangbehälter für ablaufende beim Kochen entstehende Flüssigkeiten aufweist.

15. Mobiler Esstisch nach einem der vorangehenden Ansprüche, **dadurch gekennzeichnet, dass** der Esstisch (1) ein Kommunikationsmodul umfasst, welches die Kommunikation mehrere Esstische (1) untereinander ermöglicht.
